# EUROPEAN PATENT APPLICATION

(11) **EP 4 181 593 A1**
(43) Date of publication of application: **17.05.2023**
(21) Application number: 20944659.0
(22) Date of filing: 07.07.2020
(51) Int. Cl.: H04W 72/04

(54) **TERMINAL, WIRELESS COMMUNICATION METHOD AND BASE STATION**

(71) Applicant: NTT DOCOMO, INC., Chiyoda-Ku Tokyo 100-6150 (JP)
(72) Inventor: TAKAHASHI, Yuki, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2020/026587
(87) International publication number: WO 2022/009315

(57) **Abstract**

A terminal according to an aspect of the present disclosure includes: a receiving section that receives at least one of first downlink control information (DCI) or second DCI; and a control section that controls, based on at least the first DCI, determination of a channel access type to be applied to sensing, and transmission of an uplink shared channel based on a configured grant (CG-PUSCH), in which at least one of a field for sensing or a downlink feedback information (DFI) flag field is configured in common or separately for the first DCI and the second DCI, or the field for sensing and the downlink feedback information (DFI) flag field are not configured for the second DCI. According to one aspect of the present disclosure, radio communication in an NR-Unlicensed (U) system can be appropriately controlled.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, 5G, 5G+, New Radio (NR), and 3GPP Rel. 16 or later), the use of an unlicensed band (which may also be referred to as an NR-Unlicensed (U) system) is considered similarly to an existing radio communication system (for example, before 3 GPP Rel. 15).

In addition, introduction of a downlink control information (DCI) format (for example, DCI format 0_2 and DCI format 1_2) for a traffic type such as high-reliability and low-latency communication (for example, ultra-reliable and low-latency communications (URLLC)) in future radio communication systems (for example, 5G, 5G+, New Radio (NR), and 3GPP Rel. 16 or later) has been studied.

However, whether or not to support an instruction for the NR-U system by the DCI format for a traffic type such as URLLC has not been sufficiently studied.

Therefore, an object of the present disclosure is to provide a terminal, a radio communication method, and a base station capable of appropriately controlling radio communication in a NR-U system.

### Solution to Problem

A terminal according to an aspect of the present disclosure includes: a receiving section that receives at least one of first downlink control information (DCI) or second DCI; and a control section that controls, based on at least the first DCI, determination of a channel access type to be applied to sensing, and transmission of an uplink shared channel based on a configured grant (CG-PUSCH), in which at least one of a field for sensing or a downlink feedback information (DFI) flag field is configured in common or separately for the first DCI and the second DCI, or the field for sensing and the downlink feedback information (DFI) flag field are not configured for the second DCI.

### Advantageous Effects of Invention

According to one aspect of the present disclosure, radio communication in an NR-Unlicensed (U) system can be appropriately controlled.

### Brief Description of Drawings

Fig. 1 is a diagram illustrating an example of association between a channel access type and cyclic prefix (CP) extension.
Fig. 2 is a diagram illustrating an example of association between the channel access type, the CP extension, and a channel access priority class (CAPC).
Fig. 3 is a diagram illustrating an example of first transmission and retransmission by configured grant (CG)-downlink feedback information (DFI).
Fig. 4 is a diagram illustrating an example of a payload of downlink control information (DCI) corresponding to a bit length of a channel access-CP extension field.
Fig. 5 is a diagram illustrating an example of a payload of DCI corresponding to a bit length of a channel access-CP extension-CAPC field.
Fig. 6 is a diagram illustrating an example of a payload of DCI corresponding to a bit length of a hybrid automatic repeat request acknowledgement (HARQ-ACK) bitmap field.
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

### (Service (Traffic Type))

Future radio communication systems (for example, New Radio (NR)) are expected to involve traffic types (also referred to as types, services, service types, communication types, or use cases) such as an enhanced mobile broadband (eMBB), machine type communications that embody multiple simultaneous connection (for example, massive machine type communications (mMTC), Internet of Things (IoT), and high-reliability and low-latency communication (for example, ultra-reliable and low-latency communications (URLLC)). For example, it is required that URLLC have smaller latency and higher reliability than eMBB.

The traffic type may be identified in a physical layer based on at least one of the following.
- Logical channels with different priorities
- Modulation and coding scheme (MCS) table (MCS index table)
- Channel quality indication (CQI) table
- Downlink control information (DCI) format
- System information-radio network temporary identifier (RNTI) used for scrambling (masking) of cyclic redundancy check (CRC) bit included in (added to) DCI (DCI format)
- Radio resource control (RRC) parameter
- Specific RNTI (for example, RNTI for URLLC, MCS-C-RNTI, or the like)
- Search space
- Predetermined field in DCI (for example, newly added field or reuse of existing field)

Specifically, a traffic type of hybrid automatic repeat request acknowledgement (HARQ-ACK) for a physical downlink shared channel (PDSCH) (or physical uplink control channel (PUCCH)) may be determined based on at least one of the followings.
- MCS index table used to determine at least one of modulation order, target code rate, or transport block size (TBS) of PDSCH (for example, whether to use MCS index table 3)
- RNTI used for CRC scrambling of DCI used for scheduling PDSCH (for example, whether CRC scrambled with C-RNTI or MCS-C-RNTI)
- Priority that is configured by higher layer signaling

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

The traffic type may be associated with communication requirements (requirements and required conditions such as latency and error rate), a data type (voice, data, and the like), or the like.

A difference between URLLC requirements and eMBB requirements may be that URLLC is lower in latency than eMBB or that URLLC requirements include reliability requirements.

For example, eMBB user (U)-plane latency requirements may include that downlink U-plane latency is 4 ms and that uplink U-plane latency is 4 ms. Meanwhile, URLLC U-plane latency requirements may include that downlink U-plane latency is 0.5 ms and that uplink U-plane latency is 0.5 ms. Furthermore, the URLLC reliability requirements may include that a 32-byte error rate is 10-5 for a U-plane latency of 1 ms.

In contrast, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

In NR Rel. 16 and beyond, configuring priorities at a plurality of levels (for example, two levels) for a predetermined signal or channel is being studied. For example, it is assumed that communication is controlled (for example, transmission control at the time of collision, and the like) by configuring different priorities for every signal or channel each corresponding to different traffic types (also referred to as services, service types, communication types, use cases, and the like). This makes it possible to control communication by configuring, for the same signal or channel, different priorities depending on a service type or the like.

The priority may be configured for a signal (for example, uplink control information (UCI) such as HARQ-ACK and a reference signal), a channel (PDSCH, physical uplink shared channel (PUSCH), or the like), a HARQ-ACK codebook, or the like. The priority may be defined by a first priority (for example, high) and a second priority (for example, low) that is lower than the first priority. Alternatively, three or more types of priorities may be configured. Notification of the information regarding the priority may be provided from a base station to the UE by using at least one of higher layer signaling or DCI.

For example, priorities may be configured for HARQ-ACK for a PDSCH that is dynamically scheduled, HARQ-ACK for a semi-persistent PDSCH (semi-persistent scheduling (SPS) PDSCH), and HARQ-ACK for SPS PDSCH release. Alternatively, priorities may be configured for HARQ-ACK codebooks corresponding to these HARQ-ACKs. Note that, in a case where a priority is configured for a PDSCH, the priority of the PDSCH may be replaced with a priority of HARQ-ACK for the PDSCH.

The UE may control UL transmission based on the priorities in a case where different UL signals or UL channels collide with each other. For example, control may be performed in such a way that UL transmission with high priority is performed and that UL transmission with low priority is not performed (for example, dropped). Alternatively, transmission timing of UL transmission with low priority may be changed (for example, to defer or to shift).

The collision between different UL signals/UL channels may be a case where time resources (or time resources and frequency resources) of the different UL signals or UL channels overlap with each other or a case where transmission timing of the different UL signals or UL channels overlap with each other.

In a case where notification of the priorities is provided using the DCI, whether or not a bit field (for example, priority indicator) for providing notification of the priority to the DCI is configured may be provided in notification or configured from a base station to the UE using higher layer signaling. In addition, in a case where no bit field for providing notification of the priority to the DCI is included, the UE may determine that the priority of the PDSCH (or HARQ-ACK corresponding to the PDSCH) scheduled by the DCI is a specific priority (for example, low).

### (Priority Configuration)

Furthermore, in NR Rel. 16 and beyond, configuring priorities at a plurality of levels (for example, two levels) for a predetermined signal or channel is being studied. For example, it is assumed that communication is controlled (for example, transmission control at the time of collision, and the like) by configuring different priorities for every signal or channel each corresponding to different traffic types (also referred to as services, service types, communication types, use cases, and the like). This makes it possible to control communication by configuring, for the same signal or channel, different priorities depending on a service type or the like.

The priority may be configured for a signal (for example, uplink control information (UCI) such as HARQ-ACK and a reference signal), a channel (PDSCH, physical uplink shared channel (PUSCH), or the like), a HARQ-ACK codebook, or the like. The priority may be defined by a first priority (for example, high) and a second priority (for example, low) that is lower than the first priority. Alternatively, three or more types of priorities may be configured. Notification of the information regarding the priority may be provided from a base station to the UE by using at least one of higher layer signaling or DCI.

For example, priorities may be configured for HARQ-ACK for a PDSCH that is dynamically scheduled, HARQ-ACK for a semi-persistent PDSCH (semi-persistent scheduling (SPS) PDSCH), and HARQ-ACK for SPS PDSCH release. Alternatively, priorities may be configured for HARQ-ACK codebooks corresponding to these HARQ-ACKs. Note that, in a case where a priority is configured for a PDSCH, the priority of the PDSCH may be replaced with a priority of HARQ-ACK for the PDSCH.

In addition, priorities may be configured for a dynamic grant-based PUSCH, a configured grant-based PUSCH, or the like.

The UE may control UL transmission based on the priorities in a case where different UL signals or UL channels collide with each other. For example, control may be performed in such a way that UL transmission with high priority is performed and that UL transmission with low priority is not performed (for example, dropped). Alternatively, transmission timing of UL transmission with low priority may be changed (for example, to defer or to shift).

The collision between different UL signals/UL channels may be a case where time resources (or time resources and frequency resources) of the different UL signals or UL channels overlap with each other or a case where transmission timing of the different UL signals or UL channels overlap with each other.

In a case where scheduling of shared channels having different priorities is performed using the DCI, how to control a plurality of DCI formats used for scheduling the shared channels and the priority of the shared channel scheduled by the DCI becomes a problem. The shared channels having different priorities may be PDSCHs having different HARQ-ACK priorities or PUSCHs having different priorities.

For example, it is conceivable to control scheduling of shared channels having different priorities by using one of an existing DCI format (for example, DCI format 0_1/1_1) or a new DCI format (for example, DCI format 0_2/1_2) supported in Rel. 15. If the UE is configured to monitor one of the existing DCI format or the new DCI format, the existing DCI format or the new DCI format may support scheduling of both the first priority (or URLLC) and the second priority (or eMBB).

### (HARQ Process)

For a UE in which carrier aggregation (CA) or dual connectivity (DC) is configured, there may be one independent HARQ entity for each cell (CC) or each cell group (CG). The HARQ entity may manage a plurality of HARQ processes in parallel.

In a radio communication system, data transmission is based on scheduling, and scheduling information for downlink (DL) data transmission is carried in downlink control information (DCI). A HARQ process number (HPN) is given to a HARQ process. The DCI includes a 4-bit HARQ process number field indicating the HARQ process number used for the current data transmission. The HARQ entity manages a plurality (up to 16) of HARQ processes in parallel. That is, the HARQ process numbers include HPN0 to HPN15. The HARQ process number is also referred to as a HARQ process identifier (HARQ process ID).

A unit of transmitting uplink (UL) data by a physical uplink shared channel (PUSCH) and a unit of transmitting DL data by a physical downlink shared channel (PDSCH) may be referred to as a transport block (TB). The TB is a unit handled by a media access control (MAC) layer. The control of HARQ (retransmission) may be performed for each TB or may be performed for each code block group (CBG) including one or more code blocks (CBs) in a TB.

The user terminal transmits information indicating positive acknowledgement (ACK)/negative acknowledgement (NACK) of HARQ, which indicates whether or not decoding of a DL transport block having received using the PDSCH is successful, to a base station using a physical uplink control channel (PUCCH), a PUSCH, or the like.

In a case where a plurality of pieces of UL data or a plurality of pieces of DL data is not spatially multiplexed in a physical layer, a single HARQ process corresponds to one transport block (TB). In a case where a plurality of pieces of UL data or a plurality of pieces of DL data is spatially multiplexed in the physical layer, a single HARQ process may correspond to one or more transport blocks (TBs).

### (Unlicensed Band)

In an unlicensed band (for example, 2.4 GHz band, 5 GHz band, or 6 GHz band), it is assumed that a plurality of systems such as a Wi-Fi system and a system (licensed-assisted access (LAA) system) supporting LAA coexist. Therefore, it is necessary to avoid collision of transmissions and/or control interference between the plurality of systems.

In LAA of the existing LTE system (for example, Rel. 13), data transmitting apparatus performs listening for confirming the presence or absence of transmission of other pieces of apparatus (for example, base station, user terminal, Wi-Fi device, and the like) before transmission of data in the unlicensed band. The listening may be referred to as listen before talk (LBT), clear channel assessment (CCA), carrier sense, channel sensing, sensing, a channel access procedure, a shared spectrum channel access procedure, energy detection (ED), or the like.

The transmitting apparatus may be, for example, a base station (for example, gNodeB (gNB)) in downlink (DL) and a user terminal (for example, user equipment (UE)) in uplink (UL). Furthermore, a receiving apparatus that receives data from the transmitting apparatus may be, for example, a user terminal in DL and a base station in UL.

In the LAA of the existing LTE system, the transmitting apparatus starts data transmission after a predetermined period (for example, immediately after or after a backoff period) after it is detected that there is no transmission from other pieces of apparatus in the LBT (idle state).

Use of an unlicensed band is also studied in a future radio communication system (for example, 5G, 5G+, New Radio (NR), or 3GPP Rel. 15 or later). An NR system using an unlicensed band may be referred to as an NR-unlicensed (U) system, an NR LAA system, or the like.

It is possible that dual connectivity (DC) between a licensed band and an unlicensed band, stand-alone (SA) of an unlicensed band, or the like be included in the NR-U.

A node (for example, a base station or a UE) in NR-U confirms that a channel is idle by the LBT for coexistence with other systems or other operators and then starts transmission.

In an NR-U system, a base station (for example, gNB) or a UE obtains a transmission opportunity (TxOP) and performs transmission when an LBT result is idle. The base station or the UE does not perform transmission when the LBT result is busy (LBT-busy). A transmission opportunity time may be referred to as a channel occupancy time (COT).

Note that the LBT-idle may be replaced with LBT success. LBT-busy may be replaced with LBT failure.

### (Channel Access Type)

In a future radio communication system (for example, NR Rel. 16 and beyond), it is considered that the UE performs the LBT based on a plurality of LBT types. The LBT type may be referred to as a channel access type, a channel access mode, a shared channel access type, or the like.

In NR Rel. 16 and beyond, the channel access type may be distinguished into any one of types: Type 1, Type 2A, Type 2B, and Type 2C. The UE may perform an uplink channel access operation based on any of the above-described channel access types when a specific higher layer parameter (for example, ChannelAccessMode-r16) is provided, and the specific higher layer parameter is not configured as a specific condition (for example, ChannelAccessMode-r16 = semi-static).

The name of the channel access type is not limited thereto. As the name of the channel access type, for example, in "channel access type X", X may be an arbitrary number, an alphabetical character, or a combination of a number and an alphabetical character, or may be another name.

Type 1 channel access may be channel access with a variable transmission waiting time (contention window size (CWS)) in accordance with random backoff. Type 1 channel access may be a channel access type used in a coexistence environment with another unlicensed band (for example, Wi-Fi).

In Type 1 channel access, a terminal (including a terminal in another radio telecommunication specification)/gNB may perform sensing in a specific period before transmission of a signal. The specific period may include at least an extension period (which may also be referred to as defer duration) (for example, 43 µs) and a sensing slot (for example, 9 µs).

In Type 1 channel access, a specific counter (timer) may be configured for the terminal/gNB, and when the counter expires (a value of the counter becomes 0), signal transmission may be allowed.

The counter may decrease every time one sensing slot (for example, 9 µs) elapses. In a case where signal transmission by a terminal/gNB other than the terminal/gNB is detected (LBT busy), the counter configured for the terminal/gNB may stop in a specific period (a period in which the signal is transmitted). The counter may be started again after the specific period (the period in which the signal is transmitted) elapses.

In a case where values of counters configured for a plurality of terminals/gNBs become 0 at a certain moment and signal transmissions by the plurality of terminals/gNBs overlap each other, CWSs of the terminals may be increased.

Type 2A channel access may be channel access without the random backoff. In Type 2A channel access, a first period (for example, a period of 25 µs (which may also be referred to as a sensing interval, a gap, or the like)) including a period in which sensing is performed may be set, and the UE may perform sensing in the period. In a case of LBT idle in the sensing, the UE may perform signal transmission immediately after the period elapses.

Type 2B channel access may be channel access without the random backoff. In Type 2B channel access, a second period (for example, a period of 16 us) including a period in which sensing is performed may be set, and the UE may perform sensing in the period. In a case of LBT idle in the sensing, the UE may perform signal transmission immediately after the period elapses.

Type 2C channel access may be channel access in which a period equal to or shorter than the first period or the second period (for example, 16 µs) is set for the UE, but sensing is not performed in the period. The UE may perform signal transmission in a predetermined period (for example, a period of up to 584 µs) immediately after the period elapses.

Cyclic prefix (CP) extension may be configured to control a period in which sensing is performed in each channel access type. The CP extension may be indicated by a specific time corresponding to a CP extension index. The specific time may be at least one of 25 µs, 16+T_{TA} µs, or 25+T_{TA} us, in which T_{TA} represents a timing advance.

The UE may receive information regarding the channel access type and the indication of the CP extension based on at least one of higher layer signaling or physical layer signaling.

The UE may receive the information regarding the channel access type and the indication of the CP extension included in a specific DCI format (for example, DCI format 0_0/1_0/1_1). The information regarding the channel access type and the indication of the CP extension may be a channel access-CP extension (ChannelAccess-CPext) field included in DCI format 0_0. The channel access-CP extension field included in DCI format 0_0/1_0 may have a bit length of two bits. A bit length of 0 to 4 bits may be settable for the channel access-CP extension field included in DCI format 1_1.

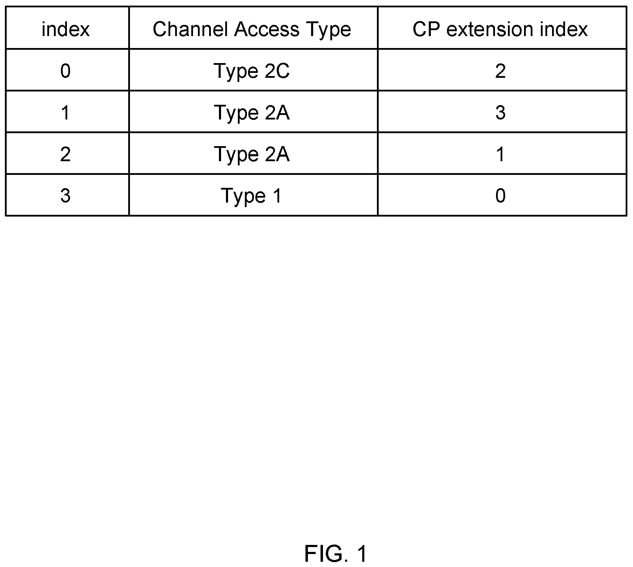

Fig. 1 is a diagram illustrating an example of association between the channel access type and the CP extension. In the example illustrated in Fig. 1, the channel access type and the CP extension correspond to each of indexes 0 to 3. The UE is notified of a value of the channel access-CP extension field included in DCI format 0_0/1_0. The UE determines an index value corresponding to the field value, and determines the channel access type and the CP extension corresponding to the index value based on the association as illustrated in Fig. 1.

The CP extension illustrated in Fig. 1 is indicated by an index, and a CP extension value corresponding to the index may be set. Furthermore, the association in Fig. 1 is merely an example, and the association between the channel access type and the CP extension is not limited thereto.

In addition, when a specific higher layer parameter (for example, ul-dci-triggered-UL-ChannelAccess-CPext-CAPC-r16) is configured, the UE may receive information regarding the channel access type and the indication of the CP extension included in DCI format 0_1. The information regarding the channel access type and the indication of the CP extension may be a channel access-CP extension-channel access priority classes (CAPCs) (ChannelAccess-CPext-CAPC) field included in DCI format 0_1.

The channel access-CP extension-CAPC field may be a field that indicates a CAPC for the UE. The CAPCs may be a specific number (for example, four) of channel access priority classes for a certain traffic type specified by different 5G quality of service (QoS) indicators (5QI). The specific number may be any integer other than 4.

A bit length of 0 to 6 bits may be settable in the channel access-CP extension-CAPC (ChannelAccess-CPext-CAPC) field. When the number of entries in a specific higher layer parameter (for example, ULDCI-triggered-UL-ChannelAccess-CPext-CAPC-List-r16) is I, the bit length may be Ceil(log₂(I)) bits. Ceil(X) in the present disclosure may mean a ceiling function of X.

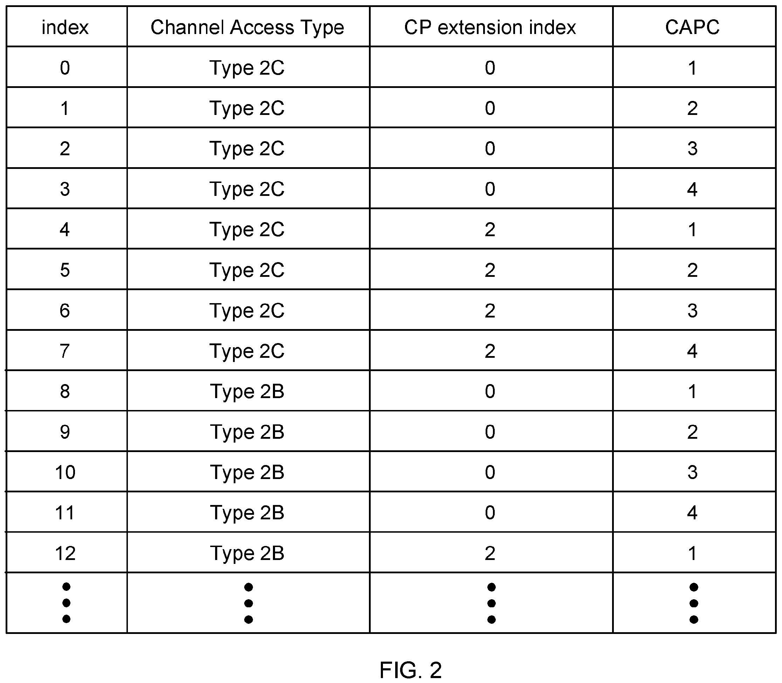

Fig. 2 is a diagram illustrating an example of association between the channel access type, the CP extension, and the CAPC. In the example of Fig. 2, the channel access type, the CP extension, and the CAPC correspond to each index. When a specific higher layer parameter (for example, ul-dci-triggered-UL-ChannelAccess-CPext-CAPC-r16) is configured, the UE is notified of the value of the channel access-CP extension-CAPC field included in DCI format 0_1. The UE determines an index value corresponding to the field value, and determines the channel access type, the CP extension, and the CAPC corresponding to the index value based on the association as illustrated in Fig. 2.

The CP extension and the CAPC illustrated in Fig. 2 are each indicated by an index, and a CP extension value and the number of 5QIs corresponding to the index may be set. Furthermore, the association in Fig. 2 is merely an example, and the association between the channel access type, the CP extension, and the CAPC is not limited thereto.

### (Downlink Feedback Information (DFI) Flag Field)

In a future radio communication system (for example, NR Rel. 16 and beyond), the UE may receive information regarding retransmission of a signal/channel (for example, a physical uplink shared channel (PUSCH) and uplink control information (UCI)) included in a specific DCI format (for example, DCI format 0_1). The UE may control retransmission of the signal/channel based on the information regarding the retransmission.

The information regarding the retransmission of the signal/channel may be a DFI flag field.

The DFI flag field may have a bit length of 0 or 1 bit. When the UE is configured to monitor DCI format 0_1 that is CRC-scrambled with a cell-specific radio network temporary identifier (CS-RNTI), and performs shared spectrum channel access in a certain cell, the DFI flag field may have a bit length of 1 bit. Otherwise, the bit length of the DFI flag field may be 0 bits.

When the DFI flag field has a bit length of 1 bit, in a case where the value of the DFI flag field is 1, the UE may be instructed to activate Type 2 configured grant (CG) transmission. Further, when the DFI flag field has a bit length of 1 bit, in a case where the value of the DFI flag field is 0, CG-DFI may be indicated for the UE.

When the CG-DFI is indicated for the UE, the remaining bits that constitute DCI format 0_1 may be determined. Specifically, when the CG-DFI is indicated for the UE, the remaining bits constituting DCI format 0_1 may include a HARQ-ACK bitmap field, a transmission power control (TPC) command for scheduled PUSCH field. The TPC command field may have a bit length of 2 bits.

The HARQ-ACK bitmap field may have a bit length of 16 bits. Bits of the HARQ-ACK bitmap may correspond to HARQ process indexes (HPN) in ascending order from the most significant bit (MSB) to the least significant bit (LSB). In the present disclosure, the MSB and the LSB may be interchanged. When a value of the HARQ-ACK bitmap field is 1, ACK may be indicated for a PUSCH/UCI of a corresponding HPN. When the value of the HARQ-ACK bitmap field is 0, NACK may be indicated for a PUSCH/UCI of a corresponding HPN.

The UE may transmit UCI on a PUSCH (CG-PUSCH) based on a configured grant. The UCI may be referred to as UCI (CG-UCI) based on the configured grant. The CG-UCI may be transmitted in the NR-U system.

The CG-UCI may include a specific field. The specific field may be at least one of a HARQ process number (HPN) field, a redundancy version (RV) field, a new data indicator (NDI) field, or a channel occupancy time (COT) sharing information field.

The HPN field may have a bit length of 4 bits. The RV field may have a bit length of 2 bits. The NDI field may have a bit length of 1 bit.

The COT sharing information field may have a bit length of Ceil(log₂(C)) bits, in which a specific higher layer parameter (for example, ULtoDL-CO-SharingED-Threshold-r16) and another higher layer parameter (for example, cg-COT-SharingList-r16) are configured and the number of configured combinations in the another higher layer parameter (for example, cg-COT-SharingList-r16) is C.

Furthermore, the COT sharing information field may have a bit length of 1 bit when a specific higher layer parameter (for example, ULtoDL-CO-SharingED-Threshold-r16) is not configured and another higher layer parameter (for example, cg-COT-SharingList-r16) is configured. In cases other than the above two cases, the COT sharing information field may be 0 bits.

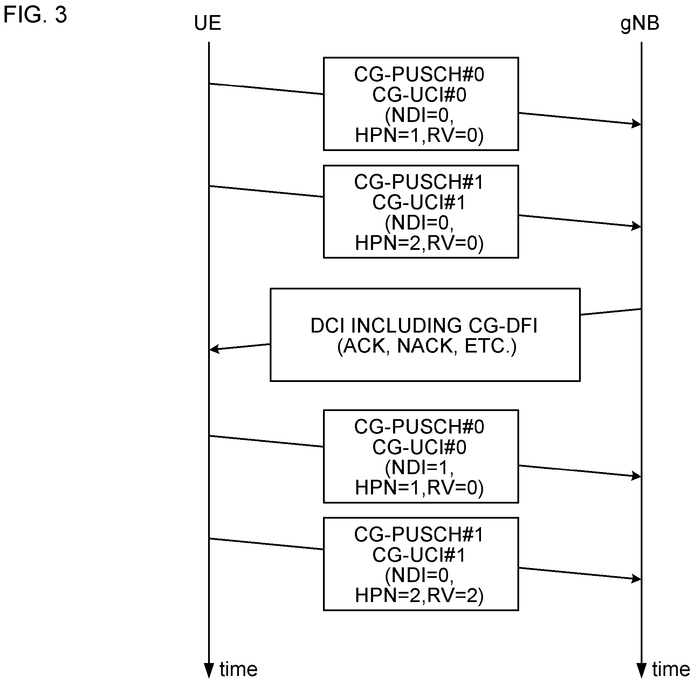

Fig. 3 is a diagram illustrating an example of first transmission and retransmission by the CG-DFI. In the example of Fig. 3, the UE transmits CG-UCI #0 via CG-PUSCH #0 and transmits CG-UCI #1 via CG-PUSCH #1 to the gNB.

Next, the gNB notifies the UE of at least ACK/NACK indicating a reception processing result for CG-UCI #0 and CG-UCI #1 by the HARQ-ACK bitmap field included in the DCI indicating the CG-DFI. At this time, the gNB notifies the UE of information indicating ACK for CG-UCI #0 and indicating NACK for CG-UCI #1.

Next, the UE retransmits the CG-PUSCH based on the value of the HARQ-ACK bitmap field included in the DCI received from the gNB. In the example of Fig. 3, the UE transmits CG-UCI #3 via CG-PUSCH #3 and retransmits CG-UCI #1 via CG-PUSCH #4 to the gNB. At this time, the NDI of CG-UCI #3 is toggled (the value is changed to 1), and the NDI of retransmitted CG-UCI #1 is not toggled (the value remains 0). In the example of Fig. 3, the RV value (2) set for the retransmitted CG-UCI is different from the value (0) of the first transmitted CG-UCI, but the RV values corresponding to the first transmitted CG-UCI and the retransmitted CG-UCI, respectively, may be the same as each other or different from each other.

### (DCI format for URLLC)

In Rel. 16 and beyond, introduction of a DCI format for a traffic type such as high-reliability and low-latency communication (for example, ultra-reliable and low-latency communications (URLLC)) is considered. The DCI format may be referred to as DCI format 0_2 or DCI format 1_2. DCI format 0_2 may be DCI (UL grant) for scheduling a PUSCH. DCI format 1_2 may be DCI (DL assignment) for scheduling a PDSCH.

The name of the new DCI format is not limited thereto. For example, the name of the new DCI format for scheduling the PDSCH and the PUSCH may be obtained by replacing "2" of DCI format 1_2 and DCI format 0_2 with an arbitrary character string other than "0" and "1" or may be another name.

DCI format 0_2 and DCI format 1_2 may be DCI formats in which a part of a payload is limited as compared with an existing DCI format (for example, DCI format 0 1 and DCI format 1_1).

Specifically, DCI format 0_2 and DCI format 1_2 do not have to allow code block group-based transmission and reception. In addition, a redundancy version (RV) field included in DCI format 0_2 and DCI format 1_2 may be settable to 0 to 2 bits. Further, the HARQ process number field included in DCI format 0_2 and DCI format 1_2 may be settable to 0 to 4 bits. Further, a sounding reference signal (SRS) request field included in DCI format 0_2 and DCI format 1_2 may be settable to 0 to 3 bits.

Further, a PUCCH resource indicator field and a transmission configuration indication state (TCI) field included in DCI format 1_2 may be settable to 0 to 3 bits. Further, a carrier indicator field included in DCI format 0_2 and DCI format 1_2 may be settable to 0 to 3 bits.

As described above, the number of bits of each field included in DCI format 0_2 and DCI format 1_2 can be set to be smaller than that in an existing DCI format (for example, DCI format 0_0, DCI format 0_1, DCI format 1_0, and DCI format 1_1), whereby the payload (size) of the DCI format can be reduced and the reliability of communication can be improved.

By the way, whether or not the DCI format used in the NR-U system is supported by the DCI format for URLLC has not been sufficiently studied.

Specifically, which field included in the DCI is supported or the number of bits of a specific field included in the DCI in a case where the DCI format for URLLC is used as the DCI format used in the NR-U system have not been sufficiently studied. In addition, a study for how to indicate CG-DFI/Type 2 CG-PUSCH for the UE when the DFI flag field is not included in the DCI format for URLLC in a case where the DCI format for URLLC is used as the DCI format used in the NR-U system is not sufficient.

In a case where such study has not been sufficiently conducted, when a traffic type such as URLLC is operated in the NR-U system, reduction in throughput or a degradation in communication quality may be caused.

Therefore, the present inventors have conceived an appropriate DCI configuration method in a case where a traffic type such as URLLC is operated in the NR-U system.

Hereinafter, embodiments according to the present disclosure will be described in detail with reference to the drawings. The radio communication methods according to the embodiments may be applied alone or in combination.

In the present disclosure, "A/B" may be read as at least one of A or B, and "A/B/C" may be read as at least one of A, B, or C.

In the present disclosure, an index, an ID, an indicator, a resource ID, and the like may be replaced with each other.

In the present disclosure, a first DCI format, DCI format 0_0, DCI format 0_1, DCI format 1_0, DCI format 1_1, a DCI format for eMBB, a DCI format for PDSCH scheduling for eMBB, a DCI format that does not include the priority indicator field, a DCI format that does not include the priority indicator field for PDSCH scheduling, an existing DCI format, and a DCI format of Rel. 15 may be replaced with each other.

In the present disclosure, a second DCI format, DCI format 0_2, DCI format 1_2, a DCI format for URLLC, a DCI format for PDSCH scheduling for URLLC, a DCI format including the priority indicator field, a DCI format including the priority indicator field for PDSCH scheduling, and a new DCI format may be replaced with each other.

In the present disclosure, at least one of a field for NR-U, the specific field, the channel access-CP extension field, or the channel access-CP extension-CAPC field, a field for sensing, a field for the channel access type, a field for the channel access type and the CP extension, and a field having a size depending on configuration of a higher layer parameter for sensing may be replaced with each other.

In addition, in the present disclosure, the field for NR-U, the specific field, the downlink feedback information flag field, a field for configured grant DFI, a field for a PUSCH based on a configured grant, a field for configured grant retransmission, and a field having a size depending on configuration of a higher layer parameter for configured grant DFI may be replaced with each other.

### (Radio Communication Method)

### <First Embodiment>

In a first embodiment, the field for NR-U included in the second DCI format (for example, at least one of DCI format 0_2 or DCI format 1_2) will be described.

### [Channel Access-CP Extension Field]

The channel access-CP extension field may be included in the second DCI format (for example, at least one of DCI format 0_2 or DCI format 1_2). In other words, the UE may receive/monitor a PDCCH under the assumption that the channel access-CP extension field is included in the second DCI format.

Further, when a specific higher layer parameter (RRC parameter) is configured for the UE, the channel access-CP extension field may be included in the second DCI format. When a specific higher layer parameter (RRC parameter) is not configured for the UE, the channel access-CP extension field does not have to be included in the second DCI format. In other words, the UE may receive/monitor a PDCCH under the assumption that the channel access-CP extension field is included in the second DCI format when a specific higher layer parameter is configured.

In the present disclosure, the specific higher layer parameter may be configured in common for the second DCI format (for example, DCI format 0_2) used for scheduling of UL transmission and the like and the second DCI format (for example, DCI format 1_2) used for scheduling of DL transmission and the like. As a result, it is possible to suppress an increase in overhead of a higher layer parameter. Alternatively, specific higher layer parameters may be separately configured for DCI format 0_2 and DCI format 1_2. As a result, it is possible to flexibly control the number of fields/bits included in the DCI used for controlling UL transmission and the DCI used for controlling DL transmission.

Further, the channel access-CP extension field does not have to be included in the second DCI format. In other words, the UE may receive/monitor a PDCCH under the assumption that the channel access-CP extension field is not included in the second DCI format.

### [Channel Access-CP Extension-CAPC Field]

The second DCI format (for example, DCI format 0_2) may include the channel access-CP extension-CAPC field. In other words, the UE may receive/monitor a PDCCH under the assumption that the channel access-CP extension-CAPC field is included in the second DCI format.

Further, when a specific higher layer parameter (RRC parameter) is configured for the UE, the channel access-CP extension-CAPC field may be included in the second DCI format. When a specific higher layer parameter (RRC parameter) is not configured for the UE, the channel access-CP extension-CAPC field does not have to be included in the second DCI format. In other words, the UE may receive/monitor a PDCCH under the assumption that the channel access-CP extension-CAPC field is included in the second DCI format when a specific higher layer parameter is configured.

Further, the channel access-CP extension-CAPC field does not have to be included in the second DCI format. In other words, the UE may receive/monitor a PDCCH under the assumption that the channel access-CP extension-CAPC field is not included in the second DCI format.

### [DFI Flag Field]

The DFI flag field may be included in the second DCI format (for example, DCI format 0_2). In other words, the UE may receive/monitor a PDCCH under the assumption that the DFI flag field is included in the second DCI format.

Further, when a specific higher layer parameter (RRC parameter) is configured for the UE, the DFI flag field may be included in the second DCI format. When the specific higher layer parameter is not configured for the UE, the DFI flag field does not have to be included in the second DCI format. In other words, the UE may receive/monitor a PDCCH under the assumption that a DFI flag is included in the second DCI format when the specific higher layer parameter is configured.

Further, the DFI flag does not have to be included in the second DCI format. In other words, the UE may receive/monitor a PDCCH under the assumption that the DFI flag field is not included in the second DCI format.

According to the first embodiment, the field included in at least one of DCI format 0_2 or DCI format 1_2 can be appropriately configured, and more reliable communication can be performed.

### <Second Embodiment>

In a second embodiment, in a case where the second DCI format is used in the NR-U system, the number of bits of the field for NR-U included in the second DCI format will be described. The number of bits of the field for NR-U included in the second DCI format may be according to at least one of Embodiments 2-1 to 2-4 below.

### [Embodiment 2-1]

The bit length of the channel access-CP extension field included in the second DCI format (for example, at least one of DCI format 0_2 or DCI format 1_2) may be settable to a bit length of a specific length (for example, 0 to 4 bits) according to a specific higher layer parameter. As the bit length of the specific length, the same bit length as the bit length that can be set in the channel access-CP extension field included in the first DCI format (DCI format 0_0/0_1/1_1) may be supported.

In addition, the bit length of the channel access-CP extension field included in the second DCI format may be a single fixed value (for example, 1 or 2). With this configuration, the overhead of the RRC signaling for the UE can be reduced.

When the bit length of the channel access-CP extension field included in the second DCI format is a first fixed value (for example, 1), the channel access type indicated for the UE may be limited. In other words, when the bit length of the channel access-CP extension field included in the second DCI format is the first fixed value, the UE may determine the channel access type from the association (table) in which only one or more specific channel access types are indicated.

For example, when the bit length of the channel access-CP extension field included in the second DCI format is the first fixed value, the channel access type indicated for the UE may be limited to a combination of specific types (for example, Type 1 channel access and Type 2C channel access). In other words, when the bit length of the channel access-CP extension field included in the second DCI format is the first fixed value, the UE may determine the channel access type from the association in which only Type 1 channel access and Type 2C channel access are indicated. Accordingly, the UE can appropriately perform communication even in a coexistence environment with another radio telecommunication specification (for example, Wi-Fi).

Further, for example, when the bit length of the channel access-CP extension field included in the second DCI format is the first fixed value, the channel access type indicated for the UE may be limited to a combination of other specific types (for example, Type 2A channel access and Type 2C channel access). In other words, when the bit length of the channel access-CP extension field included in the second DCI format is the first fixed value, the UE may determine the channel access type from the association in which only Type 2A channel access and Type 2C channel access are indicated. With this configuration, the UE can determine the channel access type suitable for low delay communication, and can perform reliable communication.

Further, for example, when the bit length of the channel access-CP extension field included in the second DCI format is the first fixed value, the channel access type indicated for the UE may be limited to a specific type (for example, Type 2C channel access). In other words, when the bit length of the channel access-CP extension field included in the second DCI format is the first fixed value, the UE may determine the channel access type from the association in which only Type 2C channel access corresponding to a different CP extension index is indicated. With this configuration, the UE can determine the channel access type suitable for low delay communication, and can perform reliable communication.

Further, when the bit length of the channel access-CP extension field included in the second DCI format is a second fixed value (for example, 2), the UE may determine the channel access type from the association (table) for the first DCI format.

Further, when the bit length of the channel access-CP extension field included in the second DCI format is the second fixed value, the UE may determine the channel access type from the association that is not included in the first DCI format and that includes the combination of the channel access type and the CP extension index. With this configuration, the UE communication in the NR-U can be more flexibly controlled.

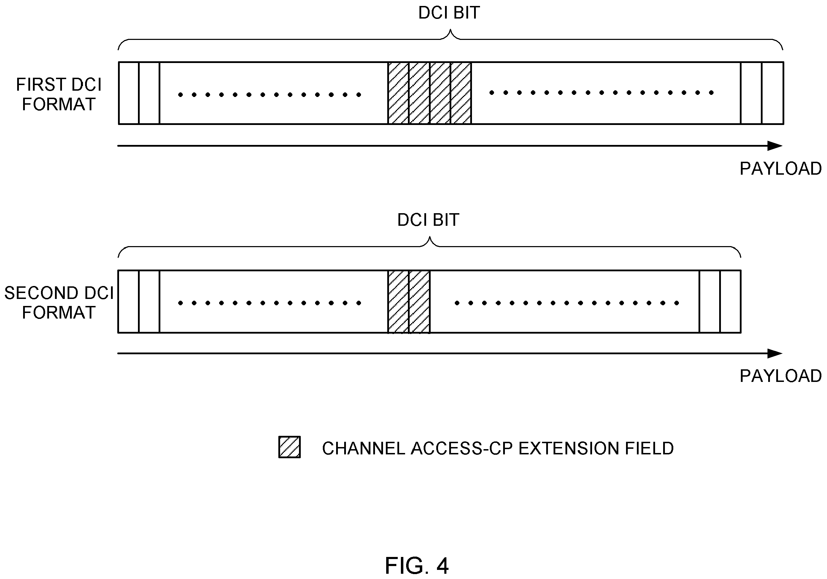

Fig. 4 is a diagram illustrating an example of a payload of DCI corresponding to the bit length of the channel access-CP extension field. The upper side of Fig. 4 illustrates a payload of DCI in a case where the channel access-CP extension field included in the first DCI format (for example, DCI format 0_0/0_1/1_1) has a bit length of 4 bits. The lower side of Fig. 4 illustrates a payload of DCI in a case where the channel access-CP extension field included in the second DCI format (for example, DCI format 0_2/1_2) has a bit length of 2 bits.

As illustrated in the example of Fig. 4, as the bit length of the channel access-CP extension field included in the second DCI format (for example, DCI format 0_2/1_2) is set to a fixed value (here, 2 bits), it is possible to reduce the payload of the DCI to be smaller as compared with the first DCI format (for example, DCI format 0_0/0_1/1_1).

### [Embodiment 2-2]

A bit length of a specific length (for example, 0 to 6 bits) may be settable to the bit length of the channel access-CP extension-CAPC field included in the second DCI format (for example, DCI format 0_2) by a specific higher layer parameter. As the bit length of the specific length, the same bit length as the bit length that can be set in the channel access-CP extension field included in the first DCI format may be supported.

Further, the bit length of the channel access-CP extension-CAPC field included in the second DCI format may be settable to be smaller than the bit length of the channel access-CP extension-CAPC field included in the first DCI format by a specific higher layer parameter. The settable bit length may be a bit length of a specific length (for example, 0 to 4 bits).

In this manner, the bit length of the field can be set to be smaller than the bit length of the channel access-CP extension-CAPC field included in the first DCI format, whereby the payload size of the DCI format can be reduced.

In addition, the bit length of the channel access-CP extension-CAPC field included in the second DCI format may be a single fixed value (for example, 1 or 2). With this configuration, the overhead of the RRC signaling for the UE can be reduced.

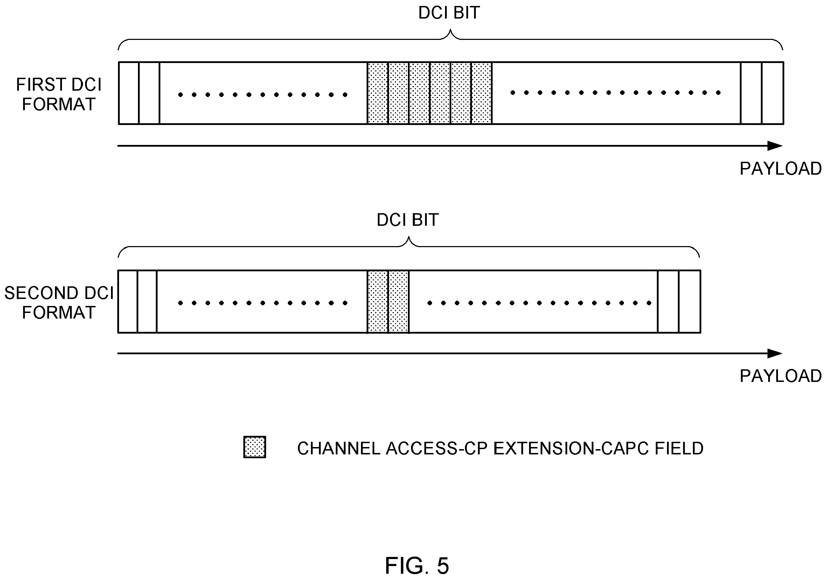

Fig. 5 is a diagram illustrating an example of a payload of DCI corresponding to the bit length of the channel access-CP extension-CAPC field. The upper side of Fig. 5 illustrates a payload of DCI in a case where the channel access-CP extension-CAPC field included in the first DCI format (for example, DCI format 0_0/0_1/1_1) has a bit length of 6 bits. The lower side of Fig. 5 illustrates a payload of DCI in a case where the channel access-CP extension-CAPC field included in the second DCI format (for example, DCI format 0_2/1_2) has a bit length of 2 bits.

As illustrated in the example of Fig. 5, as the bit length of the channel access-CP extension-CAPC field included in the second DCI format (for example, DCI format 0_2/1_2) is set to a fixed value (here, 2 bits), it is possible to reduce the payload of the DCI to be smaller as compared with the first DCI format (for example, DCI format 0_0/0_1/1_1).

### [Embodiment 2-3]

For the second DCI format (for example, DCI format 0_2), whether or not the channel access-CP extension field or the channel access-CP extension-CAPC field included in the first DCI format (DCI format 0_1) is included may be determined based on configuration of a specific higher layer parameter.

For example, when a specific higher layer parameter (RRC parameter) is configured, the channel access-CP extension-CAPC field may be included in the second DCI format. In other words, the UE may receive/monitor a PDCCH under the assumption that the channel access-CP extension-CAPC field is included in the second DCI format when a specific higher layer parameter is configured. In this case, the channel access-CP extension field does not have to be included in the second DCI format. Alternatively, in this case, the channel access-CP extension field may be included in the second DCI format.

On the other hand, when a specific higher layer parameter is not configured, the channel access-CP extension field may be included in the second DCI format. In other words, when a specific higher layer parameter is not configured, the UE may receive/monitor a PDCCH under the assumption that the channel access-CP extension field is included in the second DCI format. In this case, the channel access-CP extension-CAPC field does not have to be included in the second DCI format. Alternatively, in this case, the channel access-CP extension-CAPC field may be included in the second DCI format.

Further, for example, when a specific higher layer parameter (RRC parameter) is configured, the channel access-CP extension field may be included in the second DCI format. In other words, the UE may receive/monitor a PDCCH under the assumption that the channel access-CP extension field is included in the second DCI format when a specific higher layer parameter is configured. In this case, the channel access-CP extension-CAPC field does not have to be included in the second DCI format. Alternatively, in this case, the channel access-CP extension-CAPC field may be included in the second DCI format.

On the other hand, when a specific higher layer parameter (RRC parameter) is not configured, the channel access-CP extension-CAPC field may be included in the second DCI format. In other words, the UE may receive/monitor a PDCCH under the assumption that the channel access-CP extension-CAPC field is included in the second DCI format when a specific higher layer parameter is not configured. In this case, the channel access-CP extension field does not have to be included in the second DCI format. Alternatively, in this case, the channel access-CP extension field may be included in the second DCI format.

Further, the number of bits described in Embodiments 2-1 and 2-2 may be applied as the bit length of the channel access-CP extension field or the bit length of the channel access-CP extension-CAPC field included in the second DCI format.

### [Embodiment 2-4]

The bit length of the DFI flag field included in the second DCI format (for example, DCI format 0_2) may be settable to a bit length of a specific length (for example, 0 or 1 bit) by a specific higher layer parameter. As the bit length of the specific length, the same bit length as the bit length that can be set in the DFI flag field included in the first DCI format (DCI format 0_1) may be supported.

The bit length of the HARQ-ACK bitmap field included in the second DCI format may be settable to a bit length of a specific length (for example, 0 to 16 bits) by a specific higher layer parameter. As the bit length of the specific length, the same bit length as the bit length that can be set in the HARQ-ACK bitmap field included in the first DCI format may be supported.

The bit length of the HARQ-ACK bitmap field included in the second DCI format may be settable to be smaller than the bit length of the HARQ-ACK bitmap field included in the first DCI format by a specific higher layer parameter. The settable bit length may be a bit length of a specific length (for example, 0 to 4 bits).

In this case, a payload of the second DCI format can be reduced to be smaller than the payload of the first DCI format. Specifically, when the CG-DFI is indicated for the UE by the second DCI format, the payload of the second DCI format can be reduced to be smaller than the payload of the first DCI format. In addition, when the CG-DFI is not indicated for the UE by the second DCI format, it is possible to reduce the payload to be at least one bit smaller than that in a case where the bit length of the HARQ-ACK bitmap field is set to a fixed value.

A case where the bit length of the HARQ-ACK bitmap field is 0 bits may mean a case where the CG-DFI is not indicated for the UE. Specifically, a case where the CG-DFI is not indicated may mean at least one of a case where the CG-PUSCH in Rel. 15 is transmitted or a case where a PUSCH is dynamically transmitted.

In addition, the bit length of the HARQ-ACK bitmap field included in the second DCI format may be a single fixed value (for example, 1 or 2). With this configuration, the overhead of the RRC signaling for the UE can be reduced.

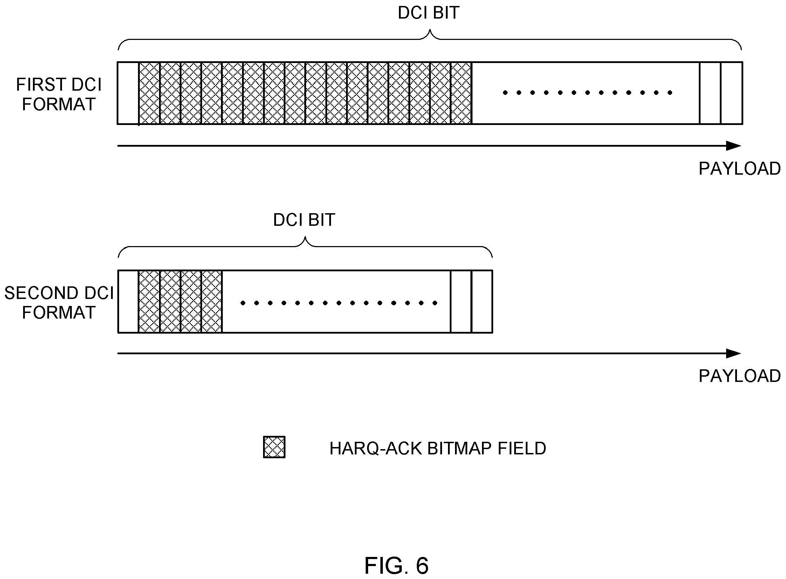

Fig. 6 is a diagram illustrating an example of a payload of DCI corresponding to the bit length of the HARQ-ACK bitmap field. The upper side of Fig. 6 illustrates a payload of DCI in a case where the HARQ-ACK bitmap field included in the first DCI format (for example, DCI format 0_0/0_1/1_1) has a bit length of 16 bits. The lower side of Fig. 6 illustrates a payload of DCI in a case where the HARQ-ACK bitmap field included in the second DCI format (for example, DCI format 0_2/1_2) has a bit length of 4 bits.

As illustrated in the example of Fig. 6, as the bit length of the channel access-CP extension-CAPC field included in the second DCI format (for example, DCI format 0_2/1_2) can be set to be smaller than that in the first DCI format, it is possible to reduce the payload of the DCI to be smaller as compared with the first DCI format.

As described above, according to the second embodiment, in a case where the DCI format for URLLC is used in the NR-U system, the number of bits of the field for the NR-U system can be appropriately set, and reliable and suitable communication can be performed.

### <Third Embodiment>

In a third embodiment, a method of indicating the CG-DFI for the UE in a case where the second DCI format is used in the NR-U system and the field for the CG-DFI is not included in the second DCI format (for example, DCI format 0_2) will be described.

In a case where the DFI flag field is not included in the second DCI format, the UE may receive the indication of the CG-DFI and control CG-PUSCH/CG-UCI transmission based on a combination of a plurality of fields included in first DCI.

In a case where the DFI flag field is not included in the second DCI format, the UE may receive the indication of the CG-DFI by using DCI used for PDCCH validation for activation/deactivation of Type 2 CG-PUSCH.

In a case where the UE receives the indication of the CG-DFI by using the DCI used for the PDCCH validation for the activation of Type 2 CG-PUSCH, the HARQ-ACK bitmap field included in the DCI may have a bit length of 16 bits. Further, the TPC command field included in the DCI may have a bit length of 2 bits. Further, the values of the HPN field and the RV field included in the DCI may be 0. A value of a field other than the fields included in the DCI may be 0.

Further, in a case where the UE receives the indication of the CG-DFI by using the DCI used for the PDCCH validation for the deactivation of Type 2 CG-PUSCH, the HARQ-ACK bitmap field included in the DCI may have a bit length of 16 bits. Further, the TPC command field included in the DCI may have a bit length of 2 bits. Further, the values of the HPN field and the RV field included in the DCI may be 0.

In a case where the UE receives the indication of the CG-DFI by using the DCI used for the PDCCH validation for the activation/deactivation of Type 2 CG-PUSCH, the UE may receive the indication of the activation/deactivation of Type 2 CG-PUSCH and the CG-DFI by using the same DCI.

In addition, in a case where the UE receives the indication of the CG-DFI by using the DCI used for the PDCCH validation for the activation/deactivation of Type 2 CG-PUSCH, the UE may receive the DCI on the assumption that only the indication of the CG-DFI is received.

As described above, according to the third embodiment, even in a case where the field for the CG-DFI is not included in the second DCI format (for example, DCI format 0_2), the CG-DFI can be appropriately indicated for the UE.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

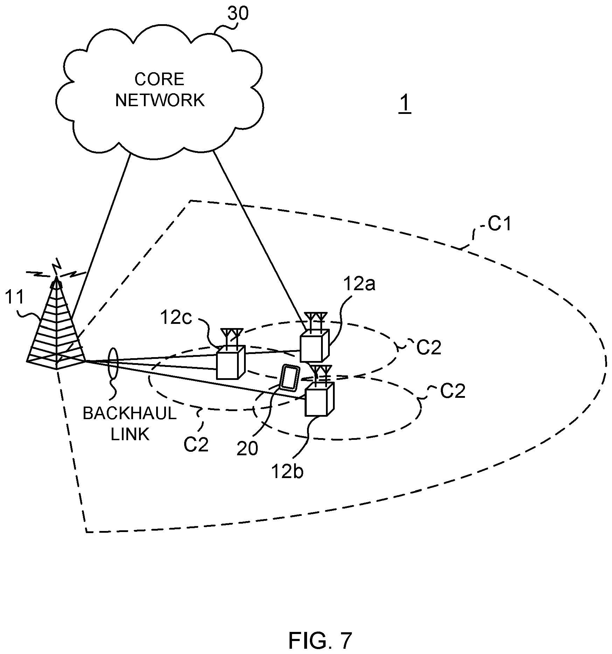

Fig. 7 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations (for example, RRHs) 10 may be connected by wire (for example, an optical fiber, an X2 interface, or the like in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that the DMRS may be referred to as a user terminal-specific reference signal (UE-specific reference signal).

### (Base Station)

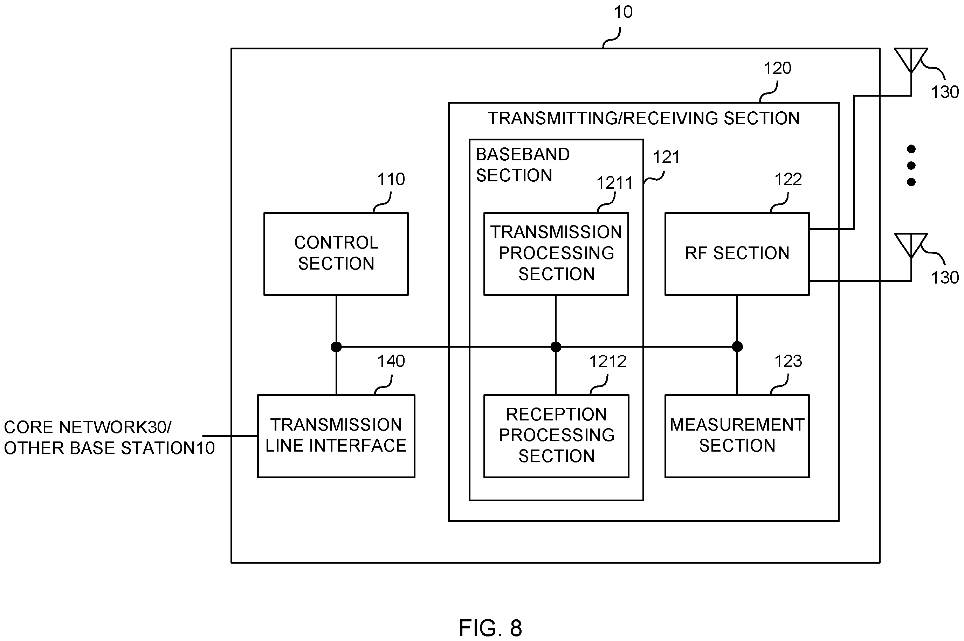

Fig. 8 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitting section/receiving section, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, or the transmission line interface 140.

The transmitting/receiving section 120 may transmit at least one of first DCI or second DCI. The control section 110 may control reception of an uplink signal to which a channel access type determined based on at least the first DCI is applied, and reception of an uplink shared channel based on a configured grant (CG-PUSCH) transmitted based on at least the first DCI. At least one of a field for sensing or a downlink feedback information (DFI) flag field may be configured in common or separately for the first DCI and the second DCI, or the field for sensing and the downlink feedback information (DFI) flag field do not have to be configured for the second DCI (first embodiment).

### (User Terminal)

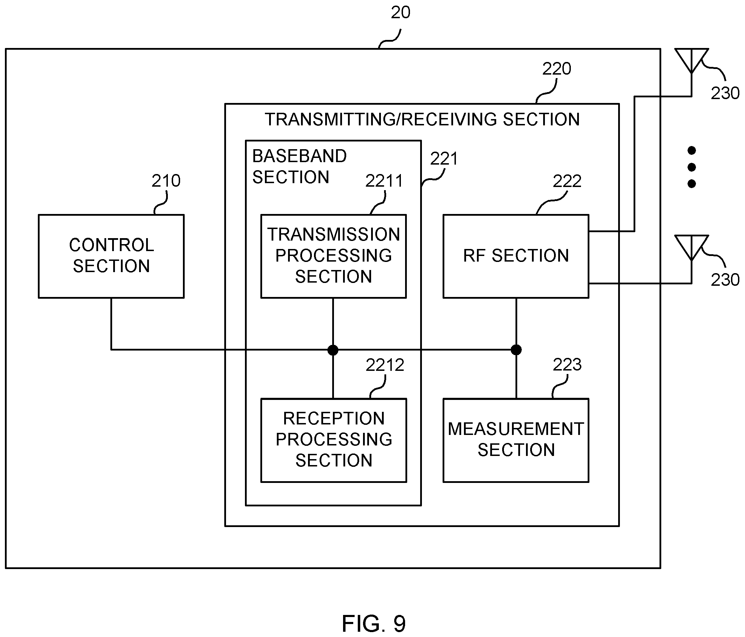

Fig. 9 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive at least one of the first DCI or the second DCI. The control section 210 may control, based on at least the first DCI, determination of a channel access type to be applied to sensing and transmission of an uplink shared channel based on a configured grant (CG-PUSCH). At least one of a field for sensing or a downlink feedback information (DFI) flag field may be configured in common or separately for the first DCI and the second DCI, or the field for sensing and the downlink feedback information (DFI) flag field do not have to be configured for the second DCI (first embodiment).

A bit length of the field for sensing included in the second DCI may be set to be smaller than a bit length of the field for sensing included in the first DCI in a case where a specific higher layer parameter is configured (second embodiment).

The field for sensing may include a field indicating a channel access type and cyclic prefix extension, and a field indicating a channel access type, cyclic prefix extension, and a channel access priority class (first and second embodiments).

In a case where the DFI flag field is not configured for the second DCI, the control section 210 may control transmission of the CG-PUSCH based on a combination of a plurality of fields included in the first DCI (third embodiment).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

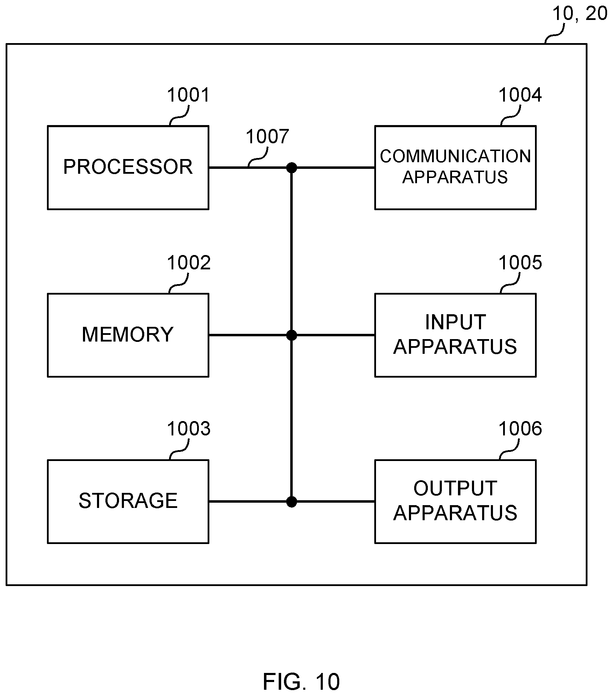

For example, the base station, the user terminal, and the like according to one embodiment of the present disclosure may function as a computer that executes the processing of the radio communication method of the present disclosure. Fig. 10 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. The processor 1001 may be implemented by one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 controls the entire computer by, for example, operating an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, and the like from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

The apparatuses such as the processor 1001 and the memory 1002 are connected by a bus 1007 for communicating information. The bus 1007 may be implemented using a single bus, or may be implemented using different buses for different connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented using at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

The radio frame, the subframe, the slot, the mini slot, and the symbol each represent a time unit in signal communication. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that a unit representing the TTI may be referred to as a slot, a mini slot, or the like instead of a subframe.

Here, the TTI refers to, for example, a minimum time unit of scheduling in radio communication. For example, in the LTE system, a base station performs scheduling to allocate radio resources (a frequency bandwidth, transmission power, and the like that can be used in each user terminal) to each user terminal in TTI units. Note that the definition of the TTI is not limited thereto.

The TTI may be a transmission time unit of a channel-coded data packet (transport block), a code block, a codeword, and the like or may be a processing unit of scheduling, link adaptation, and the like When the TTI is given, a time interval (for example, the number of symbols) to which a transport block, a code block, a codeword, or the like is actually mapped may be shorter than the TTI.

When one slot or one mini slot is referred to as the TTI, one or more TTIs (that is, one or more slots or one or more mini slots) may be a minimum time unit of scheduling. The number of slots (the number of mini slots) constituting the minimum time unit of scheduling may be controlled.

A TTI having a duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on a numerology.

The RB may include one or more symbols in the time domain, and may have a length of one slot, one mini slot, one subframe, or one TTI. One TTI, one subframe, and the like may each be comprised of one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a predetermined signal/channel outside the active BWP. Note that "cell", "carrier", and the like in the present disclosure may be replaced with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, and the like described in the present disclosure may be represented using absolute values, or may be represented using relative values with respect to predetermined values, or may be represented using other corresponding information. For example, a radio resource may be instructed by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, an instruction, a command, information, a signal, a bit, a symbol, a chip, and the like, which may be referred to throughout the above description, may be represented by a voltage, a current, an electromagnetic wave, a magnetic field or a magnetic particle, an optical field or an optical photon, or any combination of these.

Information, signals, and the like can be output in at least one of a direction from a higher layer to a lower layer or a direction from a lower layer to a higher layer. Information, signals, and the like may be input and output via a plurality of network nodes.

Input and output information, signals, and the like may be stored in a specific location (for example, memory), or may be managed using a control table. The information, signals, and the like to be input and output can be overwritten, updated, or appended. The output information, signals, and the like may be deleted. The input information, signals, and the like may be transmitted to another apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and the like).

Determination may be performed using a value represented by one bit (0 or 1), or may be performed using a Boolean represented by true or false, or may be performed by comparing numerical values (for example, comparison with a predetermined value).

Software, regardless of whether it is referred to as software, firmware, middleware, microcode, or a hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, and the like

Moreover, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station and the mobile station also includes a device that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. Thus, references to first and second elements do not mean that only the two elements can be employed, or that the first element must precede the second element in some form.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, "determining" may be regarded as "determining" receiving (for example, receiving information), transmitting (for example, transmitting information), inputting, outputting, accessing (for example, accessing data in memory), and the like.

Moreover, "determining" may be interpreted as "determining" resolving, selecting, choosing, establishing, comparing, and the like. In other words, "determining" used herein may be interpreted to mean making "determination" related to some action.

In addition, "determining" may be replaced with "assuming", "expecting", "considering", or the like.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

## Claims

1. A terminal comprising:
a receiving section that receives at least one of first downlink control information (DCI) or second DCI; and
a control section that controls, based on at least the first DCI, determination of a channel access type to be applied to sensing, and transmission of an uplink shared channel based on a configured grant (CG-PUSCH),
wherein at least one of a field for sensing or a downlink feedback information (DFI) flag field is configured in common or separately for the first DCI and the second DCI, or a field for sensing and a downlink feedback information (DFI) flag field are not configured for the second DCI.

2. The terminal according to claim 1, wherein a bit length of the field for sensing included in the second DCI is set to be smaller than a bit length of the field for sensing included in the first DCI in a case where a specific higher layer parameter is configured.

3. The terminal according to claim 1, wherein the field for sensing includes a field indicating a channel access type and cyclic prefix extension, and a field indicating a channel access type, cyclic prefix extension, and a channel access priority class.

4. The terminal according to claim 1, wherein in a case where the DFI flag field is not configured for the second DCI, the control section controls transmission of the CG-PUSCH based on a combination of a plurality of fields included in the first DCI.

5. A radio communication method of a terminal, the radio communication method comprising:
receiving at least one of first DCI or second DCI; and
controlling, based on at least the first DCI, determination of a channel access type to be applied to sensing, and transmission of an uplink shared channel based on a configured grant (CG-PUSCH),
wherein at least one of a field for sensing or a downlink feedback information (DFI) flag field is configured in common or separately for the first DCI and the second DCI, or a field for sensing and a downlink feedback information (DFI) flag field are not configured for the second DCI.

6. A base station comprising:
a transmitting section that transmits at least one of first DCI or second DCI; and
a control section that controls reception of an uplink signal to which a channel access type determined based on at least the first DCI is applied, and reception of an uplink shared channel based on a configured grant (CG-PUSCH) transmitted based on the at least first DCI,
wherein at least one of a field for sensing or a downlink feedback information (DFI) flag field is configured in common or separately for the first DCI and the second DCI, or a field for sensing and a downlink feedback information (DFI) flag field are not configured for the second DCI.
